**Europäisches Patentamt**

**European Patent Office**

**Office européen des brevets**

(11) Veröffentlichungsnummer: **0 216 809**
**B1**

## EUROPÄISCHE PATENTSCHRIFT

(45) Veröffentlichungstag der Patentschrift:
**10.08.88**

(51) Int. Cl.⁴: **B 22 D 31/00, F 23 N 1/00**

(21) Anmeldenummer: **86901356.5**

(22) Anmeldetag: **05.03.86**

(86) Internationale Anmeldenummer:
**PCT/DE 86/00084**

(87) Internationale Veröffentlichungsnummer:
**WO 86/05725 (09.10.86 Gazette 86/22)**

(54) **GASZUFÜHREINRICHTUNG ZUM EINLASSEN EINES AUS MINDESTENS ZWEI KOMPONENTEN BESTEHENDEN, BRENNBAREN GASGEMISCHES.**

(30) Priorität: **30.03.85 DE 3511731**

(43) Veröffentlichungstag der Anmeldung:
**08.04.87 Patentblatt 87/15**

(45) Bekanntmachung des Hinweises auf die Patenterteilung:
**10.08.88 Patentblatt 88/32**

(84) Benannte Vertragsstaaten:
**AT CH DE FR GB IT LI**

(56) Entgegenhaltungen:
**EP-A-0 050 726**
**FR-A-2 157 290**
**US-A-3 229 077**
**US-A-3 756 630**

**Control Engineering, Vol. 8, No. 6, June 1961, New York, (US), D. Barlow: "Bridge autoblends gas at the pump", page 139; figure 1**

(73) Patentinhaber: **ROBERT BOSCH GMBH, Postfach 50, D-7000 Stuttgart 1 (DE)**

(72) Erfinder: **CONRAD, Hans-Jürgen, Lessingstrasse 25, D-7255 Rutesheim (DE)**

## Beschreibung

Die Erfindung geht aus von einer Gaszuführeinrichtung nach der Gattung des Patentanspruchs 1. Bei Anlagen zum thermischen Entgraten von Werkstücken erfolgt ein ungezielter Abtrag, bei dem das gesamte Werkstück einem Hitzeschock ausgesetzt vird. Bevorzugt abgetragen verden Ecken und Kanten, da diese Stellen bei großer Oberfläche und kleinem Volumen besonders viel Wärme aufnehmen und somit oxidiert bzw. verbrannt werden. Der Hitzeschock wird durch das Abbrennen eines Brenngas-Sauerstoffgemisches erzeugt, wobei Wasserstoff oder Erdgas bzw. Methan als Brenngas verwendet werden. Zur Steuerung des Entgratprozesses stehen zwei Einflußgrößen zur Verfügung, nämlich die Gasmenge im Brennraum und das Mischungsverhältnis der Gaskomponenten. Diese beiden Einflußgrößen bestimmen die Energiemenge und die Temperatur. Metalle werden in jedem Fall mit einem Sauerstoffüberschuß entgratet, da sonst nur ein Abschmelzen aber keine Verbrennung der Grate erfolgen würde. Je mehr Sauerstoff im Brennraum vorhanden ist, umso intensiver ist die Entgratwirkung in bezug auf die Radienbildung und die mengenmäßige Gratbeseitigung.

Bei bekannten Entgratanlage (EP-A-0 050 726) werden die Gasgemischkomponenten von Vorratsbehältern zunächst in Dosierzylinder eingeleitet und danach mittels eines Kolbens im Dosierzylinder in den Brennraum eingestoßen. Dieser Vorgang kann sich zum Druckaufbau im Brennraum mehrfach wiederholen. Der Kolbenhub ist stufenlos verstellbar, jedoch für Brenngas und Sauerstoff immer gleich groß. Der Druck in den Dosierzylindern ist über in den Zuleitungen angeordnete Reduzierventile getrennt und unabhängig voneinander einstellbar. Mit Hilfe dieser Reduzierventile kann der Druck beider Gaskomponenten beispielsweise von 0 bis 20 bar variiert werden. Die einzustellenden Parameter sind abhängig von Form, Größe und Material der zu entgratenden Werkstücke unterschiedlich und müssen anhand von Tabellen, oder soweit dies nicht möglich, empirisch ermittelt werden. Dabei muß die Bedienungsperson drei Größen, nämlich das Füllvolumen der Dosierzylinder, den Fülldruck im Sauerstoffdosierzylinder und den Fülldruck im Brenngas-Dosierzylinder in ein Verhältnis zueinander bringen, das optimale Ergebnisses zeitigt.

Vorteile der Erfindung

Die erfindungsgemäße Gaszuführeinrichtung mit den kennzeichnenden Merkmalen des Patentanspruchs 1 erbringt demgegenüber zunächst den Vorteil, daß die Gasgemischkompoenten von den Vorratsbehältern über die Zuführleitungen unmittelbar in den Brennraum bzw. in einen diesem vorgeschalteten Mischraum geleitet

vert können. Damit wird eine aufwendige Dosiervorrichtung mit Dosierzylindern und Gaseinstoßkolben entbehrlich. Des weiteren hat die erfindungsgemäße Gaszuführeinrichtung den Vorzug, daß die Bedienungsperson nur zwei Grössen, nämlich das Mischungsverhältnis am Regelkreis und die Gasmenge an der Speicher- bzw. Zählstufe vorzuwählen braucht, um unterschiedliche Mengen- bzw. Masseverhältnisse der Gaskomponenten zu erzeugen. Die die Führungsgröße darstellende Gaskomponente kann mit konstantem Druck und unterschiedlicher Menge in den Brennraum eingelassen werden, während die zweite Gaskomponente in einer ganz bestimmten, von der Einstellung des Regelkreises abhängigen Menge automatisch eingespeist wird. Die Menge des eingelassenen Gases und damit der Brennraum-Fülldruck wird bestimmt durch die Zeitspanne, die zwischen dem Öffnen der Absperrventile und deren durch ein Signal der Speicher- bzw. Zählstufe bewirkten Schließen verstreicht, während das Mischungsverhältnis der Gaskomponenten durch die Einstellung des Regelkreises vorgegeben ist. Es handelt sich also um die Überlagerung eines Meßvorgangs für die Gasmenge und eines Regelvorgangs für das Mischungsverhältnis der Gaskomponenten. Die damit erzielte Vereinfachung des Füllvorgangs erbringt insbesondere den Vorteil, daß bei erforderlich werdenden Neueinstellungen der Anlage die richtigen Einstellwerte sehr schnell, d.h. mit wenig "Probeschüssen" und ohne Gefährdung der zu entgratenden Teile infolge thermischer Überlastung gefunden werden. Das schnelle Auffinden der Sollwerte spart Sauerstoff und Brenngas und reduziert außerdem den Materialverschleiß der den Brennraum enthaltenden Brennkammer. Durch den Wegfall der Dosiervorrichtung mit Dosierzylindern und Gaseinstoßkolben wird ausserdem die Wartung und die Instandsetzung der Anlage erleichtert und vereinfacht. Darüber hinaus sorgt der Regelkreis dafür, daß das Mischungsverhältnis während des Füllvorgangs konstant bleibt.

Durch die im Unteranspruch aufgeführten Maßnahmen sind vorteilhafte Weiterbildungen und Verbesserungen der im Hauptanspruch angegebenen Einrichtung möglich. Besonders vorteilhaft hinsichtlich einer geregelten Aufbereitung des Mischungsverhältnisses ist es, daß die Zuführleitungen, ausgehend von Gasvorratsbehältern, zunächst je ein auf den maximalen Brennraum-Fülldruck eingestelltes Druckreduzierventil enthalten, und daß zwischen diesen Ventilen und den Durchflußmengenmesern das vom Meßwertvergleicher gesteuerte Dosierventil in einer der Zuführleitungen angeordnet ist.

Zeichnung

Ein Ausführungsbeispiel der Erfindung ist in der Zeichnung dargestellt und in der nachfolgenden Beschreibung unter Angabe weiterer Vorteile näher erläutert. Die Figur zeigt

eine schematisch dargestellte Anlage zum thermischen Entgraten von Werkstücken mit den zum Verständnis der Erfindung notwendigen Bauelementen.

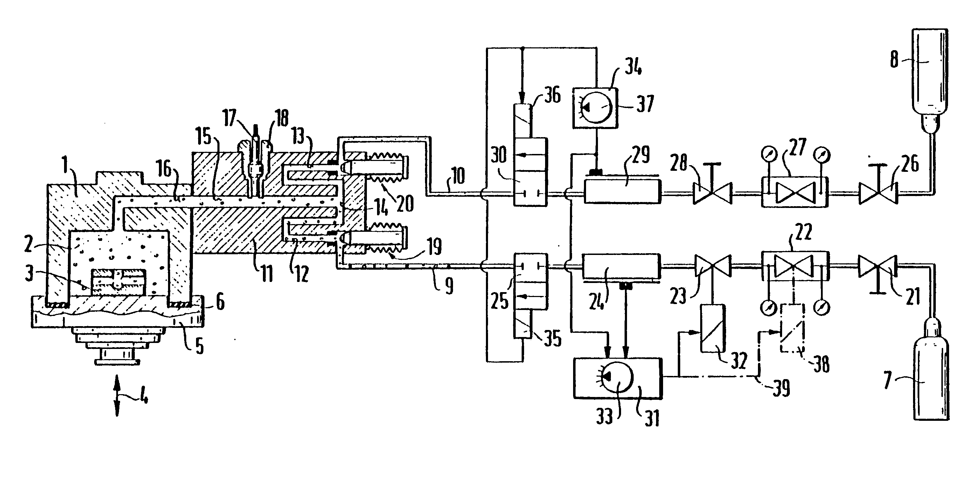

Beschreibung des Ausführungsbeispiels
In der Figur 1 ist mit 1 eine Werkstück-Bearbeitungkammer bezeichnet, in deren Brennraum 2 sich ein zu entgratendes Werkstück 3 befindet. Das Werkstück 3 ruht auf einem in Richtung des Doppelpfeils 4 bewegbaren Schließteller 5, welcher vor dem Füllen des Brennraums 2 mit einem Brenngas-Sauerstoffgemisch und Zünden desselben an die Stirnfläche der Bearbeitungskammer 1 angelegt wird. Zwischen Teller 5 und Stirnfläche ist eine Dichtung 6 angeordnet.

Die Gaskomponenten des Brenngas-Sauerstoffgemisches werden aus je einem Vorratsbehälter 7 für Brenngas bzw. 8 für Sauerstoff über druckfeste Leitungen 9 bzw. 10 in einen Mischblock 11 eingebracht. Dieser besteht aus einem massiven Metallblock, in dem Gaszuführungsbohrungen 12, 13, eine Mischraumbohrung 14 und eine Zündbohrung 15 ausgebildet sind. Durch die Zündbohrung und eine weitere, in der Bearbeitungskammer 1 ausgebildete Bohrung 16 strömt das Gasgemisch in den Brennraum 2 der Kammer. Zum Zünden des Gemisches dient eine in die Bohrung 15 hineinragende Zündkerze 17, die in einem Einsatz 18 des Mischblocks 11 sitzt. Zwischen den Zuführleitungen 9, 10 und den Zuführbohrungen 13, 14 ist im Mischblock 11 je ein Ventil 19 bzw. 20 angeordnet. Diese Ventile werden bei Beginn des Gaseinlasses durch Federkraft geöffnet und nach Abschluß des Gaseinlasses wieder geschlossen. Das Schließen der Ventile 19, 20 gegen Federwirkung und das Zuhalten derselben während des Entgratvorgangs erfolgt vorzugsweise durch Hydraulikkraft.

Die Zuführleitung 9 für Brenngas enthält, ausgehend vom Gasvorratsbehälter 7, ein handbetätigtes Abstellventil 21, ein Druckreduzierventil 22, ein Dosierventil 23, einen Durchflußmengenmesser 24 und ein Absperrventil 25. In der Zuführleitung 10 für Sauerstoff sind in gleicher Reihefolge ein Abstellventil 26, ein Druckreduzierventil 27, ein Dosierventil 28, ein Durchflußmengenmesser 29 und ein Absperrventil 30 angeordnet. Die Druckreduzierventile 22, 27 sind auf den maximal zulässigen Brennraumfülldruck von beispielsweise 30 bar eingestellt.

Die Dosierventile 23, 28 dienen zur Vorgabe bestimmter Durchflußmengen von Brenngas bzw. Sauerstoff pro Zeiteinheit. Das Dosierventil 28 für Sauerstoff ist auf einen festen Durchflußmengenwert eingestellt, während das Dosierventil 23 für Brenngas eine motorisch verstellbare Blende hat, um die dem Sauerstoff beizumischende Brenngasmenge regulieren zu können. Die Durchflußmengenmesser 24 und 29 erfassen die pro Zeiteinheit strömenden Mengen von Brenngas und Sauerstoff und bilden daraus vorzugsweise elektrische Signale, welche einem Meßwertvergleicher 31 in Form von mengenproportionalen Strömen, Spannungen oder Impulsserien zugeführt werden. Als Abgriffssysteme können beispielsweise in den Zuführleitulgen 9 und 10 angeordnete Membransysteme, Stauscheiben oder Flügelräder mit nachgeschalteten Meßumformern verwendet werden, welche aus der Bewegung von Teilen des Abgriffsystems zur Weiterverarbeitung geeignete elektrische Signale bilden. Am Ausgang des Meßwertvergleichers 31 erscheint ein Differenzsignal, das ein elektrisches Antriebssystem 32 für die Blende des Dosierventils 23 steuert. Als solches Antriebssystem kann beispielsweise ein Elektromagnet dienen, dessen Anker abhängig von der Größe der angelegten Spannung stufenlos verstellbar ist. Denkbar wäre auch die Verwendung eines Schrittschaltmotors, dem das Ausgangssignal des Meßwertvergleichers 31 in Form einer dazu proportionalen Impulszahl zugeführt wird.

Durch die Teile 23, 24, 28, 29, 31, 32 werden die Durchflußmengen der beiden in den Leitungen 9, 10 strömenden Gaskomponenten vor ihrem Eintritt in den Mischblock 11 in einem vorgegebenen Verhältnis zueinander geregelt. Beide Durchflüsse werden gemessen. Der Meßwertvergleicher regelt über das Dosierventil 23 den Durchfluß des Brenngases in der Zuführleitung 9 und sorgt dann für die Aufrechterhaltung eines eingestellten Brenngas-Sauerstoffverhältnisses. Führungsgröße ist der Sauerstoffdurchfluß, Regelgröße ist der Brenngasdurchfluß, Störgröße ist der Vordruck in der Sauerstoff-Zuführleitung und Stellgröße ist die Stellung des Brenngas-Dosierventils 23. Selbstverständlich könnte als Führungsgröße auch der Brenngasdurchfluß verwendet werden.

Um das Mischungsverhältnis von Sauerstoff und Brenngas auf verschiedene Werte einstellen zu können, ist am Meßwertvergleicher 31 ein Stellglied 33 vorgesehen, mit dessen Hilfe das Verhältnis der von der Führungsgröße und der Stellgröße über die Durchflußmengenmesser 24, 29 eingegebenen Signale veränderbar ist. Hierzu kann im Falle eines Spannungsvergleichs beispielsweise in einer das Spannungssignal der Regelgröße führenden Leitung ein veränderbarer Widerstand angeordnet sein. Je nach Einstellung dieses Widerstands wird die Regelgröße, d.h. die Brenngaszufuhr pro Zeiteinheit im Vergleich zur Sauerstoffzufuhr über das Dosierventil 23 auf größere oder kleinere Werte eingeregelt. Anstatt im Meßwertvergleicher 31 könnte die Einstellung unterschiedlicher Mischungsverhältnisse auch in den Durchflußmengenmessen durch Einbau verstellbarer Drosseln oder dergleichen vorgenommen werden.

Außer dem Mischungsverhältnis der beiden Gaskomponenten muß auch die Menge des in den Brennraum 2 eingelassenen Gasgemisches berücksichtigt und von Fall zu Fall festgelegt werden. Dies geschieht mit Hilfe der in den Zuführleitungen 9, angebrachten Absperrventile 25 bzw. 30. Diese Ventile sprechen auf das Signal einer Speicher- bzw. Zählstufe 34 an, welche an den Durchflußmengenmesser 29 für Sauerstoff angeschlossen ist. Als Speicher kann ein bistabiler Multivibrator mit RC-Verhalten dienen, in den eine durchflußmengenabhängige Spannung aus dem Durchflußmengenmesser 29 eingespeist wird und der nach Erreichen eines bestimmten Aufladepegels eines Kondensators ein das Ansprechen der Absperrventile 25, 30 auslösendes Ausgangssignal an Schließmagnete 34 bzw. 35 der Ventile liefert. Anstelle eines solchen Speichers könnte auch eine Zählstufe verwendet werden, die nach Empfang einer einstellbaren Anzahl von Impulsen ein das Ansprechen der Absperrventile veranlassendes Ausgangssignal liefert. Zum Einstellen des Zeitpunkts der Signalgabe hat die Speicher- bzw. Zählstufe 34 einen Steller 37, mit dem unterschiedliche Füllmengen vorwählbar sind.

Der für die Entgratung erforderliche Gasfülldruck und damit die Füllmenge hangt im wesentlichen vom Werkstoff des Teiles ab. Für Methan-Sauerstoffgemische kann man rechnen mit

3 bis 7 bar für Zinklegierungen
5 bis 10 bar für Aluminium
8 bis 40 bar für Messing und Stahl.

Die kleinere Zahl gilt dabei für dünne Grate und geringe Kammerfüllung, die größere Zahl für stärkere Grate, Kantenverrundung und hohe Kammerfüllung.

Die Dosierventile 23, 28 können entfallen, wenn dafür das Druckreduzierventil 22 zur Eingabe des Stellgröße benutzt und vom Ausgangssignal des Meßwertvergleichers 31 gesteuert wird. Ein hierzu vorgesehener elektrischer Stellantrieb 38 und eine Steuerleitung 39 sind in der Zeichnung in gestrichelten Linien angedeutet. Diese Bauart ist besonders aufwandsparend, erfordert jedoch einen sehr schnell ansprechenden Regelkreis, da die Zeitspanne bis zum Erreichen eines bestimmten Kammerfülldrucks erheblich kürzer ist als bei Verwendung zusätzlicher Dosierventile, welche die Strömungsgeschwindigkeit der Gase herabsetzen.

## Patentansprüche

1. Gaszuführeinrichtung zum Einlassen eines aus mindestens zwei Komponenten bestehenden brennbaren Gasgemisches in den Brennraum einer thermischen Entgratanlage zur Behandlung von Werkstücken mittels Temperatur- und Druckstößen durch Zünden des Gasgemisches, mit einer Zuführleitung für jede Gaskomponente sowie mit einer in den Leitungen angeordneten, einstellbaren Dosiervorrichtung für die Gasmenge und das Mischungsverhältnis der Gaskomponenten, dadurch gekennzeichnet, daß die Dosiervorrichtung einen auf unterschiedliche Mischungsverhältnisse einstellbaren Regelkreis aufweist, der einen Durchflußmengenmesser (24 bzw. 29) in jeder Zuführleitung (9 bzw. 10), einen an die Ausgänge der Durchflußmengenmesser angeschlossenen Meßwertvergleicher (31) und ein Dosierventil (28 bzw. 23) in jeder Zuführleitung aufweist, von denen das eine Dosierventil (28) für die die Führungsgröße bildende Gaskomponente auf einen festen Wert eingestellt ist, während das andere Dosierventil (23) für die die Regelgröße bildende Gaskomponente an den Ausgang des Meßwertvergleichers (31) angeschlossen ist und von diesem motorisch betätigt wird, und daß zwischen den beiden Durchflußmengenmessern und dem Brennraum in den Zuführleitungen Absperrventile (25, 35 bzw. 30, 36) angeordnet sind, welche auf ein Signal einer an einen der Durchflußmengenmesser angeschlossenen, einstellbaren Speicher- und Zählstufe (34) nach dem Durchfluß einer vorwählbaren Gasmenge ansprechen.

2. Gaszuführeinrichtung nach Anspruch 1, dadurch gekennzeichnet, daß die Zuführleitungen (9, 10), ausgehend von Gasvorratsbehältern (7 bzw. 8) zunächst je ein auf den maximalen Brennraumfülldruck eingestelltes Druckreduzierventil (22 bzw. 27) enthalten, und daß zwischen diesen Ventilen und den Durchflußmengenmessern (24, 29) das von dem Meßwertvergleicher (31) betätigte Dosierventil (23) in einer (9) der Zuführleitungen angeordnet ist.

## Claims

1. Gas feeding device to admit a combustible gas mixture consisting of at least two components into the combustion space of a thermal deburring system for the treatment of workpieces by means of temperature and pressure shocks by igniting the gas mixture, with a feeding line for each gas component and with an adjustable dosing arrangement, arranged in the lines, for the gas quantity and the mixing ratio of the gas components, characterized in that the dosing arrangement has a control circuit which can be adjusted to various mixing ratios, has a flow meter (24 and 29) in each feeding line (9 and 10), a measured quantity comparator (31), connected to the outputs of the flow meters, and a dosing valve (28 and 23) in each feeding line, of which the one dosing valve (28) is set to a fixed value for the gas component forming the reference variable, while the other dosing valve (23) for the gas component forming the controlled variable is connected to the output of the measured quantity comparator (31) and is motor-operated by the latter, and in that shut-off valves (25, 35 and 30, 36) are arranged between the two flow meters and the combustion space in the feeding lines, which shut-off valves respond to a signal of a memory or counting stage (34)

<div align="center">0 216 809</div>

connected to one of the flow meters after a predetermined quantity of gas has flowed through.

2. Gas feeding device according to claim 1, characterized in that the feeding lines (9, 10), starting from gas supply containers (7 and 8), firstly each include a pressure reducing valve (22 and 27) set to the maximum combustion space filling pressure, and in that the dosing valve (23) operated by the measured quantity comparator (31) is arranged between these valves and the flow meters (24, 29) in one (9) of the feeding lines.

**Revendications**

1. Dispositif d'alimentation d'un mélange de gaz combustible formé d'au moins un composant dans la chambre de combustion d'une installation d'ébarbage thermique pour traiter des pièces à l'aide de chocs de température et de pression par allumage du mélange gazeux, dispositif comportant une conduite d'alimentation pour chacun des composants gazeux ainsi qu'un dispositif de dosage réglable des mélanges gazeux et du rapport de mélanges des composants gazeux dans les conduites, dispositif caractérisé en ce qu'il comporte un circuit de régulation réglable pour des rapports de mélanges différents, circuit qui comporte un comparateur de grandeurs de mesure relié aux sorties (24, 29) de chacun des débitmètres (31) montés dans chaque conduite d'alimentation (9, 10), ainsi qu'une vanne de dosage (28, 23) montée dans chaque conduite d'alimentation, l'une des vannes de dosage (28) étant réglée à une valeur fixe pour la composante gazeuse constituant la grandeur-guide alors que l'autre vanne de dosage (23) est reliée à la sortie du comparateur de mesure (31) pour la composante gazeuse formant une grandeur de réglage, cette dernière vanne étant actionnée par un moteur et des vannes d'arrêt (25, 35 ou 30, 36) sont montées dans les conduites d'alimentation entre les deux débitmètres et la chambre de combustion, vannes qui sont mises en oeuvre par un signal d'un étage de mémoire et de comptage (34) réglable relié à l'un des débitmètres, après le passage d'une quantité prédéterminée de gaz.

2. Dispositif d'alimentation en gaz selon la revendication 1, caractérisé en ce que les conduites d'alimentation (9, 10) comportent en partant des réservoirs d'alimentation de gaz (7, 9) tout d'abord une vanne de réduction de pression (22, 27) réglée respectivement pour la pression de remplissage maximale de la chambre de combustion et en ce qu'entre ces vannes et les débitmètres (24, 29), l'une (9) des conduites d'alimentation comporte la vanne de dosage (23) actionnée par le comparateur de mesure (31).